# EUROPÄISCHE PATENTSCHRIFT

(11) **EP 1 329 600 B1**
(45) Veröffentlichungstag und Bekanntmachung des Hinweises auf die Patenterteilung: **30.06.2004**
(21) Anmeldenummer: 02027722.4
(22) Anmeldetag: 11.12.2002
(51) Int. Cl.: F01N 3/20, B01D 53/90, F02M 25/10, B01J 19/08, F01N 3/023

(54) **Abgasanlage einer Verbrennungsmaschine**
Exhaust system of an internal combustion engine
Système d'échappement d'un moteur à combustion interne

(30) Priorität: 19.01.2002 DE 10201928
(43) Veröffentlichungstag der Anmeldung: 23.07.2003
(73) Patentinhaber: J. Eberspächer GmbH & Co. KG, 73730 Esslingen (DE)
(72) Erfinder: Zacke, Peter, Dr., 73095 Albershausen (DE); Hauber, Thomas, Dr., 73776 Altbach (DE)
(74) Vertreter: Patentanwalts-Partnerschaft, Rotermund + Pfusch + Bernhard

(56) Entgegenhaltungen:
- EP-A- 1 020 620
- WO-A-00/21646
- WO-A-00/43469
- DE-A- 3 440 689
- US-A- 5 020 457
- US-A- 5 806 305
- US-A- 5 980 610
- PATENT ABSTRACTS OF JAPAN vol. 006, no. 098 (C-106), 8. Juni 1982 (1982-06-08) & JP 57 030524 A (TSUCHIYA MFG CO LTD), 18. Februar 1982 (1982-02-18)

## Beschreibung

Die vorliegende Erfindung betrifft eine Abgasanlage für eine Verbrennungsmaschine, insbesondere eines Kraftfahrzeugs, mit den Merkmalen des Oberbegriffs des Anspruchs 1.

Eine derartige Abgasanlage ist aus der WO 00/21646 und aus der WO 00/43469 bekannt und umfasst einen Abgasstrang, der von der Verbrennungsmaschine erzeugtes Abgas abführt. Die Abgasanlage umfasst außerdem ein Partikelfilter, das im Abgasstrang angeordnet ist, vom Abgas durchströmt ist und darin enthaltene Partikel, z.B. Ruß, herausfiltert. Die bekannten Abgasanlagen weisen außerdem einen Plasmagenerator auf, mit dem ein reaktives Gas erzeugt werden kann, das sich zur Regeneration des Partikelfilters eignet. Beispielsweise ist dieser Plasmagenerator stromauf des Partikelfilters im Abgasstrang angeordnet, so dass der Plasmagenerator vom Abgas durchströmt ist. Hierbei kann der Plasmagenerator NO₂ aus dem NO des Abgases erzeugen. Dieses NO₂ wird im nachfolgenden Partikelfilter wieder in NO umgewandelten, wobei die frei gewordenen Sauerstoff-Atome die im Partikelfilter gespeicherten Partikel, insbesondere Rußpartikel, verbrennen. Mit Hilfe eines derartigen Plasmagenerators kann somit permanent eine Regeneration des Partikelfilters durchgeführt werden. Ein besonderer Vorteil dieser Anordnung besteht darin, dass die Funktion des Plasmareaktors, d.h. die Erzeugung des gewünschten reaktiven Gases, weitgehend unabhängig von der Abgastemperatur ist. Desweiteren haben Kraftstoffbestandteile, wie Schwefel, keinen oder nur einen geringen Einfluss auf die Wirkungsweise des Plasmagenerators, d.h. auf die Erzeugung des gewünschten reaktiven Gases.

Aus der EP 1 020 620 A1 ist eine weitere Abgasanlage bekannt, mit einem Plasmagenerator, der Ozon erzeugt. Dabei kann dem Ozongenerator Frischluft oder Abgas zugeführt werden. Die bekannte Abgasanlage eignet sich zur NO₂-Produktion mit hohem Wirkungsgrad für CRT-Systeme besonders bei niedrigen Temperaturen. Ein CRT-System besteht aus einem Partikelfilter und einem vorgeschalteten Oxidationskatalysator, der NO zu NO₂ oxidiert, das eine Filterregeneration, insbesondere kontinuierlich unterstützt. Im Plasmagenerator der bekannten Abgasanlage wird somit ein reaktives Gas erzeugt, das in einer Abgasanlage mit Katalysator und Filteranwendung zum Entfernen von Rußpartikeln Anwendung finden kann.

Die vorliegende Erfindung beschäftigt sich mit dem Problem, für eine Abgasanlage der eingangs genannten Art eine verbesserte Ausführungsform anzugeben, bei der insbesondere die Leistungsfähigkeit für die Erzeugung des gewünschten reaktiven Gases erhöht ist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Plasmagenerator außerhalb des Abgasstrangs anzuordnen und entweder mit stromauf des Partikelfilters abgezweigtem Abgas oder mit einem anderen Gas zu versorgen. In jedem Fall ist es bei der erfindungsgemäßen Ausgestaltung der Abgasanlage möglich, den dem Plasmagenerator zugeführten Gasstrom, insbesondere hinsichtlich des Volumenstroms, gezielt zu beeinflussen oder vorzugeben. Mit anderen Worten, die Versorgung des Plasmagenerators mit Gas kann im wesentlichen unabhängig von der im Abgasstrang transportierten Abgasmenge gewählt oder eingestellt werden. Hierdurch ist es möglich, den Plasmagenerator z.B. mit einer konstanten Gasmenge zu durchströmen, um dadurch den Plasmagenerator hinsichtlich der Umsatzrate zur Erzeugung des für die Regeneration des Partikelfilters benötigten reaktiven Gases zu optimieren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine stark vereinfachte Prinzipdarstellung einer Abgasanlage nach der Erfindung bei einer ersten Ausführungsform und
- Fig. 2: eine Ansicht wie in Fig. 1, jedoch bei einer zweiten Ausführungsform.

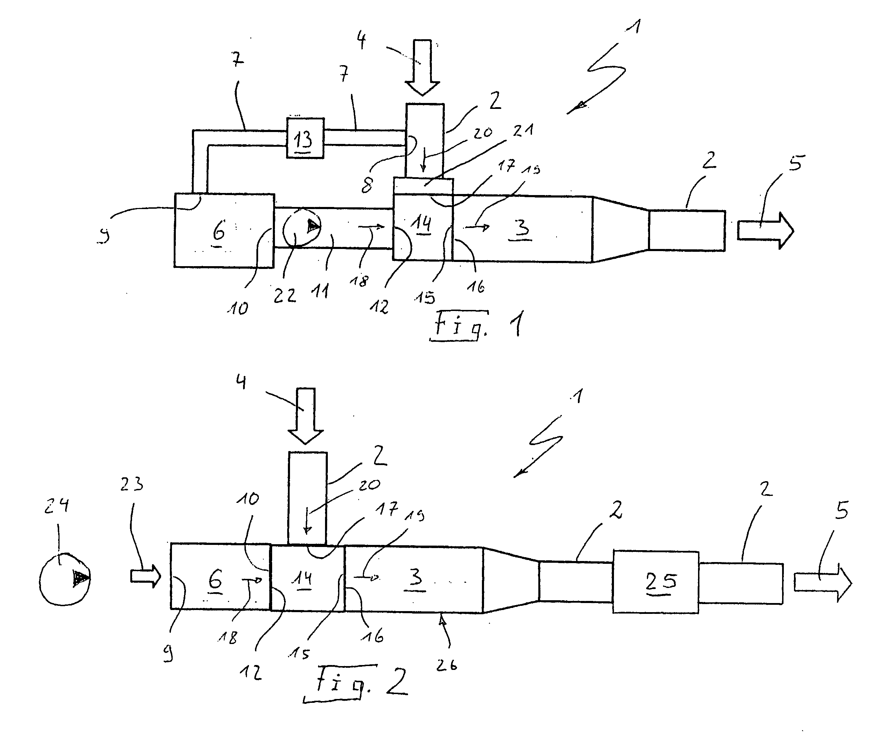

Entsprechend den Fig. 1 und 2 besitzt eine Abgasanlage 1 nach der Erfindung einen Abgasstrang 2, in dem ein Partikelfilter 3 angeordnet ist. Die Abgasanlage 1 dient zum Abführen und Behandeln von Abgasen, die von einer hier nicht dargestellten Verbrennungsmaschine erzeugt werden. Dementsprechend ist der Abgasstrang 2 an diese Verbrennungsmaschine angeschlossen oder anschließbar. Ein eingehender Pfeil 4 symbolisiert hier die Abgasströmung im Abgasstrang 2 stromauf des Partikelfilters 3. In entsprechender Weise symbolisiert ein abgehender Pfeil 5 die Abgasströmung im Abgasstrang 2 stromab des Partikelfilters 3.

Die Verbrennungsmaschine ist vorzugsweise in einem Kraftfahrzeug untergebracht. Ebenso sind Anwendungen bei stationären Verbrennungsmaschinen möglich. Es ist klar, dass die erfindungsgemäße Abgasanlage nicht auf Verbrennungsmaschinen beschränkt ist, die zur Erzeugung von Antriebs- oder Vortriebskraft dienen; vielmehr ist die erfindungsgemäße Abgasanlage grundsätzlich für beliebige Verbrennungsmaschinen oder Verbrennungsanlagen geeignet, bei denen im Betrieb durch die Verbrennung eines Brennstoffs Verbrennungsabgase entstehen.

Je nach Anwendung enthalten die Abgase Partikel, insbesondere Rußpartikel. Beispielsweise enthalten die Abgase eines Dieselmotors, aber auch eines Ottomotors, Partikel, die zur Verbesserung der Emissionswerte aus dem Abgas herausgefiltert werden. Zu diesem Zweck dient das Partikelfilter 3, das von den Abgasen durchströmt wird und dabei die Partikel herausfiltert. Die herausgefilterten Partikel lagern sich im Partikelfilter 3 ab, was mit einer Erhöhung des Durchströmungswiderstands des Partikelfilters 3 einhergeht. Um den Druckabfall am Partikelfilter 3 zu begrenzen, umfasst die Abgasanlage 1 einen Plasmagenerator 6, mit dessen Hilfe ein reaktives Gas erzeugt werden kann, das sich zur Regeneration des Partikelfilters 3 eignet.

Entsprechend Fig. 1 ist bei einer ersten Variante der Abgasanlage 1 eine Abzweigungsleitung 7 vorgesehen, die stromauf des Partikelfilters 3 bei einer Entnahmestelle 8 an den Abgasstrang 2 angeschlossen ist. Die Abzweigungsleitung 7 ist außerdem an einen Eingang 9 des Plasmagenerators 6 angeschlossen. Über die Abzweigungsleitung 7 kann somit der Plasmagenerator 6 mit Abgas versorgt werden, das stromauf des Partikelfilters 3 aus dem Abgasstrang 2 abgezweigt wird. Ein Ausgang 10 des Plasmagenerators 6 ist über eine Verbindungsleitung 11 an eine Einleitstelle 12 des Abgasstrangs 2 angeschlossen. Diese Einleitstelle 12 ist dabei stromauf des Partikelfilters 3 und stromab der Entnahmestelle 8 angeordnet. Ebenso ist es möglich, den Plasmagenerator 6 direkt an den Abgasstrang 2 anzuschließen, d.h. den Ausgang 10 des Plasmagenerators 6 direkt mit der Einleitstelle 12 des Abgasstrangs 2 zu verbinden.

Desweiteren ist ein steuerbares Stellglied 13 vorgesehen, das beispielsweise von einem hier nicht gezeigten Steuergerät betätigbar ist. Das Stellglied 13 ist bei der hier gezeigten Ausführungsform in der Abzweigungsleitung 7 angeordnet. Ebenso ist es möglich, das Stellglied 13 an einer anderen geeigneten Stelle zwischen Entnahmestelle 8 und Einleitstelle 12 anzuordnen. Mit Hilfe des Stellglieds 13 kann der durch die Abzweigungsleitung 7 dem Plasmagenerator 6 zugeführte Abgasmassenstrom, also der aus dem Abgasstrang 2 abgezweigte Abgasmassenstrom eingestellt werden. Von besonderem Vorteil ist hierbei, dass dieser Abgasmassenstrom unabhängig vom Massenstrom im Abgasstrang 2 einstellbar ist. Insbesondere ist es möglich, auch bei variierendem Abgasmassenstrom im Abgasstrang 2 einen konstanten Volumenstrom durch den Plasmagenerator 6 einzustellen. Auf diese Weise kann die Produktion des reaktiven Gases im Plasmagenerator 6 optimiert werden.

Damit die im Plasmagenerator 6 hergestellten reaktiven Gase an der Einleitstelle 12 in den Abgasstrang 2 eingeleitet werden können, muss ein entsprechendes Druckgefälle vorliegen. Ein derartiges Druckgefälle kann beispielsweise durch bauliche Maßnahmen im Strömungsweg im Inneren des Abgasstrangs 2 realisiert werden, in dem z.B. stromauf der Einleitstelle 12 ein entsprechender Strömungswiderstand erzeugt wird. Dies kann beispielsweise durch eine geeignete Strömungsumlenkung oder durch einen oder mehrere Querschnittssprünge erfolgen.

Bei den in den Fig. 1 und 2 gezeigten Ausführungsformen enthält der Abgasstrang 2 ein Mischerglied 14, das stromauf des Partikelfilters 3 angeordnet ist und die Einleitstelle 12 enthält. Ein Austritt 15 des Mischerglieds 14 ist hierbei unmittelbar an einen Einlass 16 des Partikelfilters 3 angeschlossen. Ein Eintritt 17 des Mischerglieds 14 ist an den Abgasstrang 2 angeschlossen. Der Aufbau des Mischerglieds 14 ist hier so gewählt, dass eine durch einen Pfeil symbolisierte Einströmrichtung 18 des reaktiven Gases an der Einleitstelle 12 koaxial zu einer durch einen Pfeil symbolisierten Ausströmrichtung 19 eines aus dem Abgas und dem reaktiven Gas gebildeten Gasgemischs am Austritt 15 ausgerichtet ist. Im Unterschied dazu ist eine durch einen Pfeil symbolisierte Einströmrichtung 20 des Abgases am Eintritt 17 im wesentlichen senkrecht zur Ausströmrichtung 19 des Gasgemischs am Austritt 15 ausgerichtet. Durch konstruktive Maßnahmen muss somit das Abgas relativ stark umgelenkt werden, während das reaktive Gas quasi ohne Umlenkung das Mischerglied 14 durchströmen kann.

Im Hinblick auf die Ausführungsform gemäß Fig. 1 kann auf diese Weise z.B. ein Durchströmungswiderstand für das Abgas erzeugt werden, der eine Strömung von der Entnahmestelle 8 durch den Plasmagenerator 6 zur Einleitstelle 12 unterstützt oder bewirkt. Zusätzlich oder alternativ kann im Abgasstrang 2 zwischen der Entnahmestelle 8 und der Einleitstelle 12 ein geeignetes Drosselorgan 21 angeordnet sein, um den erwünschten Druckabfall im Abgasstrang 2 zu erzeugen. Bei der in Fig. 1 dargestellten Ausführungsform handelt es sich zweckmäßig um ein steuerbares Drosselorgan 21, das von einem nicht gezeigten Steuergerät betätigbar ist. Über eine entsprechende Betätigung des Drosselorgans 21 kann der Volumenstrom des durch den Plasmagenerator 6 geführten Abgas-Teilstroms in der gewünschten Weise, insbesondere konstant, eingestellt werden.

Alternativ oder zusätzlich zu den vorgenannten Maßnahmen kann ein Gebläse 22 vorgesehen sein, das die Einleitung des reaktiven Gases in den Abgasstrang 2 unterstützt oder bewirkt. Bei der hier gezeigten Ausführungsform ist dieses Gebläse 22 exemplarisch in der Verbindungsleitung 11 angeordnet. Es ist klar, dass das Gebläse 22 auch an einer anderen, geeigneten Stelle zwischen Entnahmestelle 8 und Einleitstelle 12 angeordnet sein kann.

Entsprechend Fig. 2 kann bei einer zweiten Variante des erfindungsgemäßen Abgasstrangs 1 eine durch einen Pfeil symbolisierte Gasversorgungseinrichtung 23 vorgesehen sein, die mit dem Eingang 9 des Plasmagenerators 6 verbunden ist. Über diese Gasversorgungseinrichtung 23 wird der Plasmagenerator 6 mit einem in besonderer Weise für die Herstellung des reaktiven Gases geeigneten Gas versorgt, das vom Abgas verschieden ist. Vorzugsweise handelt es sich bei dem über die Gasversorgungseinrichtung 23 zugeführten Gas um Umgebungsluft. Bei der Ausführungsform gemäß Fig. 2 ist der Ausgang 10 des Plasmagenerators 6 direkt mit der Einleitstelle 12 des Abgasstrangs 2 verbunden, die hier ebenfalls am Mischerglied 14 ausgebildet ist. Ebenso ist es möglich, auch hier den Ausgang 10 über eine entsprechende Verbindungsleitung (11) mit der Einleitstelle 12 zu verbinden.

Um die Einleitung des reaktiven Gases in den Abgasstrang 2 zu ermöglichen bzw. zu unterstützen, kann die Gasversorgungseinrichtung 23 ebenfalls ein Gebläse 24 aufweisen, die das dem Plasmagenerator 6 zugeführte Gas mit einem geeigneten Druck beaufschlagt. Um einen gewünschten Volumenstrom durch den Plasmagenerator 6 realisieren zu können, kann das Gebläse 24 durch ein geeignetes Steuergerät gesteuert werden; Ebenso ist es möglich, dass bei einer einfachen Ausführungsform der Abgasanlage 1 ein konstanter Volumenstrom bereitgestellt wird, was über eine entsprechende Dimensionierung des Gebläses 24 erreichbar ist.

Bei einer Verbrennungsmaschine, die mit einem Abgasturbolader oder mit einem mechanischen Lader ausgestattet ist, kann die Gasversorgungseinrichtung 23 zweckmäßig die für den Plasmagenerator 6 benötigte Gasmenge auf der Druckseite eines Verdichters des Abgasturboladers oder auf der Druckseite des mechanischen Laders abzweigen und zum Eingang 9 des Plasmagenerators 6 führen. Insoweit kann auf ein ohnehin an der Verbrennungsmaschine vorhandenes Gebläse 24 (Verdichter bzw. Lader) zurückgegriffen werden. Um auch dann die zugeführte Gasmenge einstellen zu können, umfasst die Gasversorgungseinrichtung 23 z.B. ein entsprechendes Stellglied und/oder Drosselorgan, das durch ein Steuergerät betätigbar ist.

Auch bei dieser Ausführungsform ist von entscheidenem Vorteil, dass die durch den Plasmagenerator 6 geleitete Gasmenge unabhängig von dem im Abgasstrang 2 transportierten Abgasmassenstrom wählbar bzw. eingestellt oder einstellbar ist. Auf diese Weise kann die Funktion des Plasmagenerators 6 im Hinblick auf die Herstellung des gewünschten reaktiven Gases optimiert werden.

Mit Hilfe des im Plasmagenerator 6 hergestellten reaktiven Gases kann das Partikelfilter 3 regeneriert werden. Das reaktive Gas wird im Plasmagenerator 6 erzeugt, in dem ein nicht thermisches Plasma durch eine elektrisch behinderte Entladung, sogenannte "stille Entladung" bei Atmosphärendruck generiert wird. Entsprechend einer bevorzugten Anwendungsform kann der Plasmagenerator 6 permanent betrieben werden, d.h. der Plasmagenerator 6 wird immer dann aktiviert, wenn auch Abgase im Abgasstrang 2 transportiert werden. Dementsprechend wird dadurch eine permanente Regeneration des Partikelfilters 3 realisiert. Der Plasmagenerator 6 kann dabei relativ klein dimensioniert werden, um eine hinreichende Regeneration des Partikelfilters 3 gewährleisten zu können. Ebenso ist es möglich, den Plasmagenerator 6 bedarfsabhängig zu betätigen. Beispielsweise immer nur dann, wenn das Partikelfilter 3 eine vorgegebene Grenzbeladung, die beispielsweise über einen Druckabfall am Partikelfilter 3 messbar ist, erreicht hat. Mit Hilfe des vom Plasmagenerator 6 erzeugten reaktiven Gases wird im Partikelfilter 3 eine Oxidation der darin gespeicherten Partikel erreicht, wobei diese Reaktionsprodukte dann relativ gefahrlos für die Umwelt freigesetzt werden und das Partikelfilter 3 verlassen.

Der Plasmagenerator 6 wird zweckmäßig so ausgebildet, dass er möglichst viel NO₂ und O₃ produziert, wodurch sich eine besonders effektive Regeneration des Partikelfilters 3, das insbesondere als Rußfilter ausgebildet ist, ergibt. Für den Fall, dass das vom Plasmagenerator 6 erzeugte reaktive Gas im Partikelfilter 3 nicht vollständig umgesetzt werden kann, ist es zweckmäßig, im Abgasstrang 2, stromab des Partikelfilters 3 einen entsprechenden Katalysator 25 anzuordnen. In Fig. 2 ist daher exemplarisch ein derartiger Katalysator 25 dargestellt.

Der Plasmagenerator 6 oder auch Plasmareaktor kann in Form eines Plattenreaktors mit Al₂O₃-Platten als Dielektrikum aufgebaut werden. Dieser Generator- oder Reaktortyp kann mit Einfachbarrieren oder Doppelbarrieren aufgebaut werden. Für die Ausführungsform gemäß Fig. 1 eignet sich ein Plasmagenerator 6 mit Doppelbarrieren in besonderer Weise, da das abgezweigte Abgas dann mit den Elektroden des Plasmagenerators 6 nicht in Kontakt kommt, so dass unerwünschte Wechselwirkungen zwischen Abgas und Elektroden, z.B. Korrosion, vermieden werden können.

Um einen Kompakten Aufbau der Abgasanlage 1 zu erreichen, können einzelne Komponenten zusammengefasst und insbesondere in einem gemeinsamen Gehäuse untergebracht werden. Beispielsweise können gemäß Fig. 2 der Plasmagenerator 6, das Mischerglied 14 und das Partikelfilter 3 in einem gemeinsamen Gehäuse 26 untergebracht sein, wodurch diese Komponenten (6, 14, 3) eine Einheit bilden.

### Bezugszeichenliste

- 1: Abgasanlage
- 2: Abgasstrang
- 3: Partikelfilter
- 4: Zuleitung von Abgas
- 5: Ableitung von Abgas
- 6: Plasmagenerator
- 7: Abzweigungsleitung
- 8: Entnahmestelle
- 9: Eingang von 6
- 10: Ausgang von 6
- 11: Verbindungsleitung
- 12: Einleitstelle
- 13: Stellglied
- 14: Mischerglied
- 15: Austritt von 15
- 16: Einlass von 3
- 17: Eintritt von 14
- 18: Einströmrichtung des reaktiven Gases
- 19: Ausströmrichtung des Gasgemischs
- 20: Einströmrichtung des Abgases
- 21: Drosselorgan
- 22: Gebläse
- 23: Gasversorgungseinrichtung
- 24: Gebläse
- 25: Katalysator
- 26: Gehäuse

## Patentansprüche

1. Abgasanlage für eine Verbrennungsmaschine, insbesondere eines Kraftfahrzeugs,
- mit einem Abgasstrang (2), der von der Verbrennungsmaschine erzeugtes Abgas abführt,
- mit einem Partikelfilter (3), das im Abgasstrang (2) angeordnet ist,
- mit einem Plasmagenerator (6) zur Erzeugung eines reaktiven Gases, das sich zur Regeneration des Partikelfilters (3) eignet, und
- entweder mit den Merkmalen a1 und a2 oder mit den Merkmalen b1 und b2:
a1:wobei eine Abzweigungsleitung (7) vorgesehen ist, die eine Entnahmestelle (8) des Abgasstrangs (2), die stromauf des Partikelfilters (3) angeordnet ist, mit einem Eingang (9) des Plasmagenerators (6) verbindet,
a2:wobei ein Ausgang (10) des Plasmagenerators (6) mit einer Einleitstelle (12) des Abgasstrangs (2) verbunden ist, die stromauf des Partikelfilters (3) und stromab der Entnahmestelle (8) angeordnet ist,
b1:wobei ein Eingang (9) des Plasmagenerators (6) mit einer Gasversorgungseinrichtung (23) verbunden ist, die den Plasmagenerator (6) mit einem vom Abgas verschiedenen Gas versorgt, das zur Erzeugung des reaktiven Gases geeignet ist,
b2:wobei ein Ausgang (10) des Plasmagenerators (6) mit einer Einleitstelle (12) des Abgasstrangs (2) verbunden ist, die stromauf des Partikelfilters (3) angeordnet ist,
**dadurch gekennzeichnet,**
- **dass** der Abgasstrang (2) ein Mischerglied (14) enthält, das stromauf des Partikelfilters (3) angeordnet ist und die Einleitstelle (12) enthält, und
- **dass** das Mischerglied (14) so ausgebildet und angeordnet ist, dass eine Einströmrichtung (18) des reaktiven Gases an der Einleitstelle (12) im wesentlichen koaxial zu einer Ausströmrichtung (19) eines aus dem Abgas und dem reaktiven Gas gebildeten Gasgemischs an einem Austritt (15) des Mischerglieds (14) ausgerichtet ist, während eine Einströmrichtung (20) des Abgases an einem Eintritt (17) des Mischerglieds (14) im wesentlichen senkrecht zur Ausströmrichtung (19) des Gasgemischs am Austritt (15) des Mischerglieds (14) ausgerichtet ist.

2. Abgasanlage nach Anspruch 1,
**dadurch gekennzeichnet,**
**dass** ein steuerbares Stellglied (13) zum Einstellen des abgezweigten und durch die Abzweigungsleitung (7) dem Plasmagenerator (6) zugeführten Abgasmassenstroms vorgesehen ist.

3. Abgasstrang nach Anspruch 1 oder 2,
**dadurch gekennzeichnet,**
**dass** ein Gebläse (22) vorgesehen, das die Einleitung des reaktiven Gases in den Abgasstrang (2) unterstützt oder bewirkt.

4. Abgasanlage nach einem der Ansprüche 1 bis 3,
**dadurch gekennzeichnet,**
**dass** im Abgasstrang (2) zwischen der Entnahmestelle (8) und der Einleitstelle (12) ein steuerbares Drosselorgan (21) angeordnet ist.

5. Abgasanlage nach Anspruch 1,
**dadurch gekennzeichnet,**
**dass** die Gasversorgungseinrichtung (23) ein Gebläse (24) aufweist, das die Einleitung des reaktiven Gases in den Abgasstrang (2) unterstützt oder bewirkt.

6. Abgasanlage nach Anspruch 1 oder 5,
**dadurch gekennzeichnet,**
**dass** die Verbrennungsmaschine einen Abgasturbolader oder einen mechanischen Lader aufweist und dass die Gasversorgungseinrichtung (23) auf der Druckseite eines Verdichters des Abgasturboladers oder auf der Druckseite des Laders Frischluft abzweigt und zum Eingang (9) des Plasmagenerators (6) führt.

7. Abgasanlage nach einem der Ansprüche 1 bis 6,
**dadurch gekennzeichnet,**
**dass** der Ausgang (10) des Plasmagenerators (6) direkt oder über eine Verbindungsleitung (11) an die Einleitstelle (12) angeschlossen ist.

8. Abgasanlage nach einem der Ansprüche 1 bis 7,
**dadurch gekennzeichnet,**
**dass** im Abgasstrang (2) stromab des Partikelfilters (3) ein Katalysator (25) angeordnet ist.

## Claims

1. An exhaust system for an internal combustion engine, in particular in a motor vehicle,
- having an exhaust line (2) which carries away the exhaust gas generated by the internal combustion engine,
- having a particle filter (3) which is arranged in the exhaust line (2),
- having a plasma generator (6) for generating a reactive gas which is suitable for regeneration of the particle filter .(3), and
- having either features al and a2 or features b1 and b2:
a1: whereby a branching line (7) is provided, connecting a tapping point (8) of the exhaust line (2) which is arranged upstream from the particle filter (3) to an input (9) of the plasma generator (6),
a2: whereby an output (10) of the plasma generator (6) is connected to an introduction point (12) of the exhaust line (2) which is situated upstream from the particle filter (3) and downstream from the tapping point (8),
b1: whereby an input (9) of the plasma generator (6) is connected to a gas supply device (23) which supplies the plasma generator (6) with a gas which is different from the exhaust gas 'and is suitable for generating the reactive gas,
b2: whereby output (10) of the plasma generator (6) is connected to an introduction point (12) of the exhaust line (2), said introduction point being situated upstream from the particle filter (3),
**characterized in that**
- the exhaust line (2) contains a mixer element (14) which is situated upstream form the particle filter (3) and contains the introduction point (12), and
- the mixer element (14) is designed and arranged in such a way that an inflow direction (18) of the reactive gas at the introduction point (12) is essentially aligned coaxially with an outflow direction (19) of a gas mixture formed from the exhaust gas and the reactive gas at an outlet (15) of the mixer element (14), while an inflow direction (20) of the exhaust at an inlet (17) of the mixer element (14) is aligned essentially perpendicular to the direction of outflow (19) of the gas mixture at the outlet (15) of the mixer element (14).

2. The exhaust system according to Claim 1,
**characterized in that** a controllable actuator element (13) for adjusting the exhaust flow that is branched off and sent through the branch lines (7) to the plasma generator (6) is provided.

3. The exhaust line according to Claim 1 or 2,
**characterized in that** a fan (22) is provided, supporting or inducing the introduction of the reactive gas into the exhaust line (2).

4. The exhaust system according to one of Claims 1 through 3,
**characterized in that** a controllable throttle element (21) is situated in the exhaust line (2) between the tapping point (8) and the introduction point (12).

5. The exhaust system according to Claim 1,
**characterized in that** the gas supply device (23) has a fan (24) which supports or induces the introduction of the reactive gas into the exhaust line (2).

6. The exhaust system according to Claim 1 or 5,
**characterized in that** the internal combustion engine has an exhaust gas turbocharger or a mechanical charger and the gas supply device (23) branches off fresh air on the pressure side of a compressor of the exhaust gas turbocharger or on the pressure side of the charger and sends it to the input (9) of the plasma generator (6).

7. The exhaust system according to one of Claims 1 through 6,
**characterized in that** the output (10) of the plasma generator (6) is connected to the introduction point (12) either directly or via a connecting line (11).

8. The exhaust system according to one of Claims 1 through 7,
**characterized in that** a catalytic converter (25) is situated in the exhaust line (2) downstream from the particle filter (3).

## Revendications

1. Système d'échappement pour un moteur à combustion interne, en particulier d'un véhicule automobile, comprenant
- un circuit d'échappement (2), qui évacue des gaz d'échappement produits par le moteur à combustion interne,
- un filtre à particules (3), disposé dans le circuit d'échappement (2),
- un générateur à plasma (6) pour produire un gaz réactif, qui convient pour la régénération du filtre à particules (3), et
- soit les caractéristiques a1 et a2, soit les caractéristiques b1 et b2 :
a1: une conduite de dérivation (7) étant prévue, qui relie un point de prélèvement (8) du circuit d'échappement (2), disposé en amont du filtre à particules (3), à une entrée (9) du générateur à plasma (6),
a2: une sortie (10) du générateur à plasma (6) étant raccordée à un point d'introduction (12) du circuit d'échappement (2), disposé en amont du filtre à particules (3) et en aval du point de prélèvement (8),
b1: une entrée (9) du générateur à plasma (6) étant raccordée à un dispositif d'alimentation en gaz (23), qui alimente le générateur à plasma (6) en un gaz différent des gaz d'échappement, adapté à la production de gaz réactif,
b2: une sortie (10) du générateur à plasma (6) étant raccordée à un point d'introduction (12) dans le circuit d'échappement (2), disposé en amont du filtre à particules (3),
**caractérisé en ce**
- **que** le circuit d'échappement (2) comporte un organe mélangeur (14), qui est disposé en amont du filtre à particules (3) et comporte le point d'introduction (12), et
- **que** l'organe mélangeur (14) est réalisé et disposé de telle sorte qu'une direction d'afflux (18) du gaz réactif au point d'introduction (12) est orientée essentiellement coaxialement à une direction d'échappement (19) d'un mélange gazeux formé des gaz d'échappement et du gaz réactif à une sortie (15) de l'organe mélangeur (14), tandis qu'une direction d'afflux (20) des gaz d'échappement à une entrée (17) de l'organe mélangeur (14) est orientée essentiellement perpendiculairement à la direction d'échappement (19) du mélange gazeux à la sortie (15) de l'organe mélangeur (14).

2. Système d'échappement suivant la revendication 1,
**caractérisé en ce**
**qu'**il est prévu un organe de réglage (13) commandé pour régler le débit-masse de gaz d'échappement dérivé et amené par la conduite de dérivation (7) au générateur à plasma (6).

3. Système d'échappement suivant l'une des revendications 1 et 2,
**caractérisé en ce**
**qu'**il est prévu une soufflante (22) qui favorise ou provoque l'introduction du gaz réactif dans le circuit d'échappement (2).

4. Système d'échappement suivant l'une des revendications 1 à 3,
**caractérisé en ce**
**qu'**un organe d'étranglement (21) commandé est disposé dans le circuit d'échappement (2) entre le point de prélèvement (8) et le point d'introduction (12).

5. Système d'échappement suivant la revendication 1,
**caractérisé en ce**
**que** le dispositif d'alimentation en gaz (23) présente une soufflante (24) qui favorise ou provoque l'introduction du gaz réactif dans le circuit d'échappement (2).

6. Système d'échappement suivant l'une des revendications 1 et 5,
**caractérisé en ce**
**que** le moteur à combustion interne présente un turbosuralimenteur à gaz d'échappement ou un suralimenteur mécanique, et que le dispositif d'alimentation en gaz (23) dérive de l'air frais sur le côté refoulement d'un compresseur du turbosuralimenteur à gaz d'échappement ou sur le côté refoulement du suralimenteur et le conduit à l'entrée (9) du générateur à plasma (6).

7. Système d'échappement suivant l'une des revendications 1 à 6,
**caractérisé en ce**
**que** la sortie (10) du générateur à plasma (6) est raccordée directement ou par l'intermédiaire d'une conduite de jonction (11) au point d'introduction (12).

8. Système d'échappement suivant l'une des revendications 1 à 7,
**caractérisé en ce**
**qu'**un catalyseur (25) est disposé dans le circuit d'échappement (2) en aval du filtre à particules (3).
